# EUROPEAN PATENT SPECIFICATION

(11) **EP 3 663 197 B1**
(45) Date of publication and mention of the grant of the patent: **07.04.2021**
(21) Application number: 19204451.9
(22) Date of filing: 21.10.2019
(51) Int. Cl.: B64C 27/52, B64D 27/24, B64C 27/28, F01D 15/10, F41H 13/00, B64D 27/20, B64C 29/00, B64D 27/02

(54) **HIGH-SPEED HYBRID PROPULSION FOR AIRCRAFT**
HOCHGESCHWINDIGKEITSHYBRIDANTRIEB FÜR FLUGZEUGE
PROPULSION HYBRIDE HAUTE VITESSE POUR AÉRONEF

(30) Priority: 04.12.2018 US 201816208960
(43) Date of publication of application: 10.06.2020
(73) Proprietor: Bell Helicopter Textron Inc., Fort Worth, TX 76101 (US)
(72) Inventor: SCHANK, Troy Cyril, Keller, TX Texas 76248 (US); NISSEN, Jeffrey Paul, Alba, TX Texas 75410 (US)
(74) Representative: Barker Brettell LLP

(56) References cited:
- EP-A1- 3 369 655
- WO-A1-2014/137422

## Description

### TECHNICAL FIELD

This disclosure relates in general to the field of aircraft, and more particularly, to a hybrid propulsion system for tiltrotor aircraft.

### BACKGROUND

This section provides background information to facilitate a better understanding of the various aspects of the disclosure. It should be understood that the statements in this section of this document are to be read in this light, and not as admissions of prior art.

Fixed-wing aircraft, such as airplanes, are capable of flight using wings that generate lift responsive to the forward airspeed of the aircraft, which is generated by thrust from one or more jet engines or propellers. The wings generally have an airfoil cross-section that deflects air downward as the aircraft moves forward, generating the lift force to support the aircraft in flight. Fixed-wing aircraft, however, typically require a runway that is hundreds or thousands of feet long for takeoff and landing.

Unlike fixed-wing aircraft, vertical takeoff and landing (VTOL) aircraft do not require runways. Instead, VTOL aircraft are capable of taking off, hovering and landing vertically. One example of a VTOL aircraft is a helicopter which is a rotorcraft having one or more rotors that provide lift and thrust to the aircraft. The rotors not only enable hovering and vertical takeoff and landing, but also enable forward, backward and lateral flight. These attributes make helicopters highly versatile for use in congested, isolated or remote areas. Helicopters, however, typically lack the forward airspeed of fixed-wing aircraft due to the phenomena of retreating blade stall and advancing blade compression.

Tiltrotor aircraft overcome this drawback by utilizing proprotors that can change their plane of rotation based on the operation being performed. Tiltrotor aircraft typically have a pair of nacelles mounted near the outboard ends of a fixed wing with each nacelle housing a propulsion system that provides torque and rotational energy to a proprotor. The nacelles are pivotable relative to the fixed wing such that the proprotor blades have a generally horizontal plane of rotation providing vertical thrust for takeoff, hovering and landing, much like a conventional helicopter, and a generally vertical plane of rotation providing forward thrust for cruising in forward flight with the fixed wing providing lift, much like a conventional propeller driven airplane.

EP 3 369 655 A1 discloses a hybrid propulsion drive train system for tiltrotor aircraft, in which turboshaft engines provides shaft power and are capable of providing thrust, electrical generators or hydraulic pumps are connected to a shaft of the turboshaft engines and rotatable nacelles house electric or hydraulic motors, each connected to a proprotor.

WO 2014/137422 A1 discloses an aircraft and system for supplying electrical power to an aircraft electrical load, in which a generator is coupled to an engine and configured to generate electrical power for the electrical load, which may be a high energy device such as a directed energy weapon system.

### SUMMARY

In accordance with the invention there is provided a tiltrotor aircraft and a method of operating a tiltrotor aircraft as defined by the appended claims.

Disclosed herein is a tiltrotor aircraft incorporating a high-speed hybrid propulsion system includes electric motors; two or more proprotors pivotable between a vertical takeoff and landing (VTOL) position and a forward flight position, each of the proprotors coupled to one or more of the electric motors; an electric generator electrically connected to the electric motors; and a convertible turbofan engine coupled to the electric generator through a drive shaft. The convertible turbofan engine is configured for example, in forward flight, to simultaneously operate in turbofan mode to provide forward thrust and turboshaft mode to power the electric generator. In forward flight, power may be primarily directed to turbofan mode with sufficient turboshaft power to energize accessories. In VTOL flight, all or substantially all power is directed to turboshaft mode for maximum vertical lift. In VTOL flight, some power may be directed to turbofan mode to generate forward thrust for a short takeoff for example to achieve a heavy takeoff capability.

Also disclosed herein is a hybrid propulsion system for a tiltrotor aircraft includes two pivotal nacelles, each nacelle comprising an electric motor coupled to a proprotor; an electric aircraft system; an electric generator; an electrical bus electrically connected to the electric generator, the electric motors, and the electric aircraft system; and a convertible turbofan engine coupled to an electric generator through a drive shaft.

Also disclosed herein is a method that includes operating a tiltrotor aircraft having a hybrid propulsion system comprising a convertible turbofan engine having a core and a fan with inlet guide vanes, an electric generator coupled to the core by a drive shaft, proprotors located respectively with pivotable nacelles, each of the proprotors coupled to one or more electric motors, an electric aircraft system, and an electrical bus electrically connected to the electric generator, the electric motors, and the electric aircraft system; powering the proprotors in vertical takeoff and landing (VTOL) flight comprising directing electric power from the electric generators to the electric motors by operating the convertible turbofan engine in turboshaft mode and powering the drive shaft and electric generator; operating the tiltrotor aircraft in turbofan forward flight in response to operating the convertible turbofan engine in turbofan mode to produce forward thrust; producing excess electric power during the turbofan forward flight in response to directing power from the convertible turbofan engine to the drive shaft and the electric generator; and distributing the excess electric power to the electric aircraft system.

This summary is provided to introduce a selection of concepts that are further described below in the detailed description. This summary is not intended to identify key or essential features of the claimed subject matter, nor is it intended to be used as an aid in limiting the scope of claimed subject matter.

### BRIEF DESCRIPTION OF THE DRAWINGS

The disclosure is best understood from the following detailed description when read with the accompanying figures. It is emphasized that, in accordance with standard practice in the industry, various features are not drawn to scale. In fact, the dimensions of various features may be arbitrarily increased or reduced for clarity of discussion.
FIGS. 1-4 are schematic illustrations of an exemplary tiltrotor aircraft with a hybrid propulsion system in various flight modes in accordance with embodiments of the present disclosure.
Figure 5 is a schematic illustration of an exemplary tiltrotor aircraft incorporating a hybrid propulsion system in accordance with embodiments of the present disclosure.
Figure 6 is a schematic diagram illustrating an exemplary method in accordance with embodiments of the disclosure.

### DETAILED DESCRIPTION

It is to be understood that the following disclosure provides many different embodiments, or examples, for implementing different features of various illustrative embodiments. Specific examples of components and arrangements are described below to simplify the disclosure. These are, of course, merely examples and are not intended to be limiting. For example, a figure may illustrate an exemplary embodiment with multiple features or combinations of features that are not required in one or more other embodiments and thus a figure may disclose one or more embodiments that have fewer features or a different combination of features than the illustrated embodiment. Embodiments may include some but not all the features illustrated in a figure and some embodiments may combine features illustrated in one figure with features illustrated in another figure. Therefore, combinations of features disclosed in the following detailed description may not be necessary to practice the teachings in the broadest sense and are instead merely to describe particularly representative examples. In addition, the disclosure may repeat reference numerals and/or letters in the various examples. This repetition is for the purpose of simplicity and clarity and does not itself dictate a relationship between the various embodiments and/or configurations discussed.

Helicopters are incredibly useful aircraft allowing for vertical takeoff, hovering and vertical landing. However, helicopter speed and range performance falls far short of that provided by conventional fixed-wing airplanes. The development of tiltrotor technology has increased the speed rotorcraft speed to over 300 MPH (482 KPH) and extended range to approach the performance of conventional turboprop aircraft. Tiltrotor speed performance still falls short of what can be achieved by conventional jet propulsion aircraft.

Jet fighter/attack aircraft such as the AV-8B Harrier and F-35 Lightning utilize jet fan thrust to provide vertical takeoff, hovering and vertical landing, and can obtain speeds of over 600 MPH (965 KPH). However, the penalty for using jet fan thrust to provide vertical lift is a dramatically reduced useful payload, hover out of ground effect (HOGE) capability, and range performance. Reduced payload, HOGE, and range performance is a direct consequence of the increased horsepower required when using jet thrust to provide vertical lift. Dramatic increases to horsepower demands significantly high fuel consumption. The relatively efficient power loading (lb thrust per horsepower) of helicopters and tiltrotors allows for efficient vertical lift.

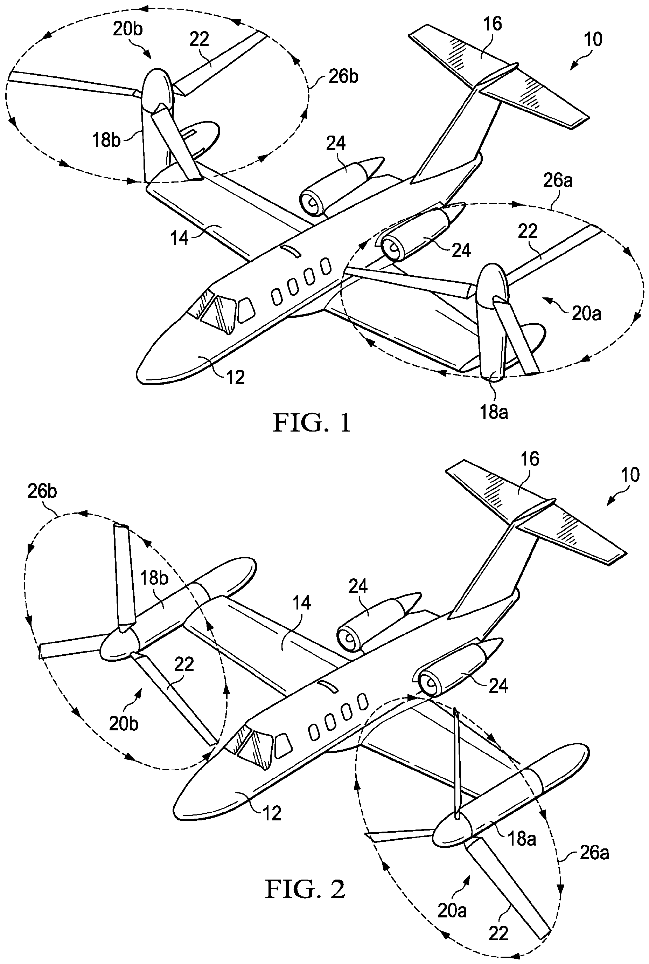

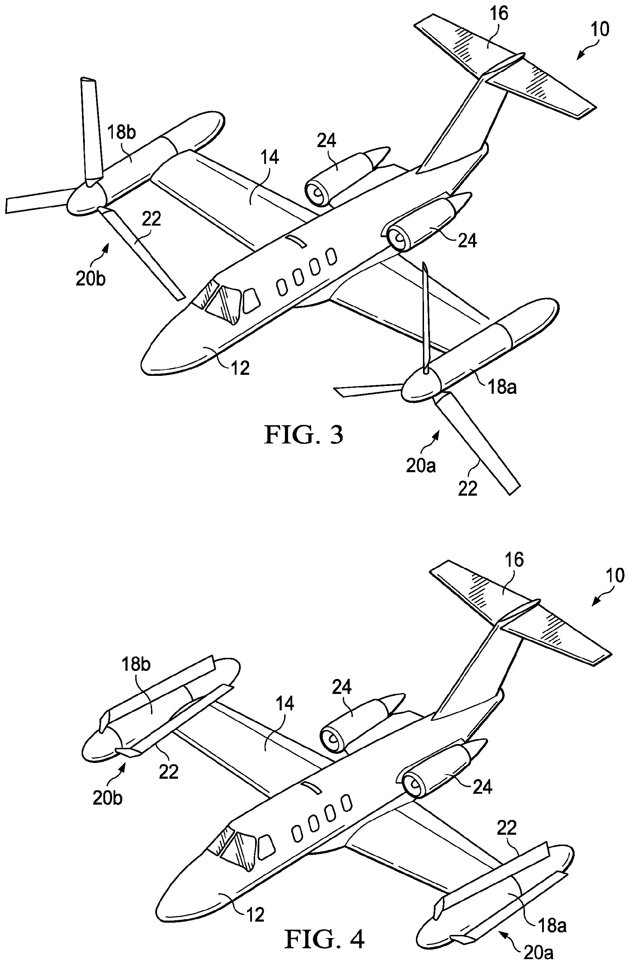

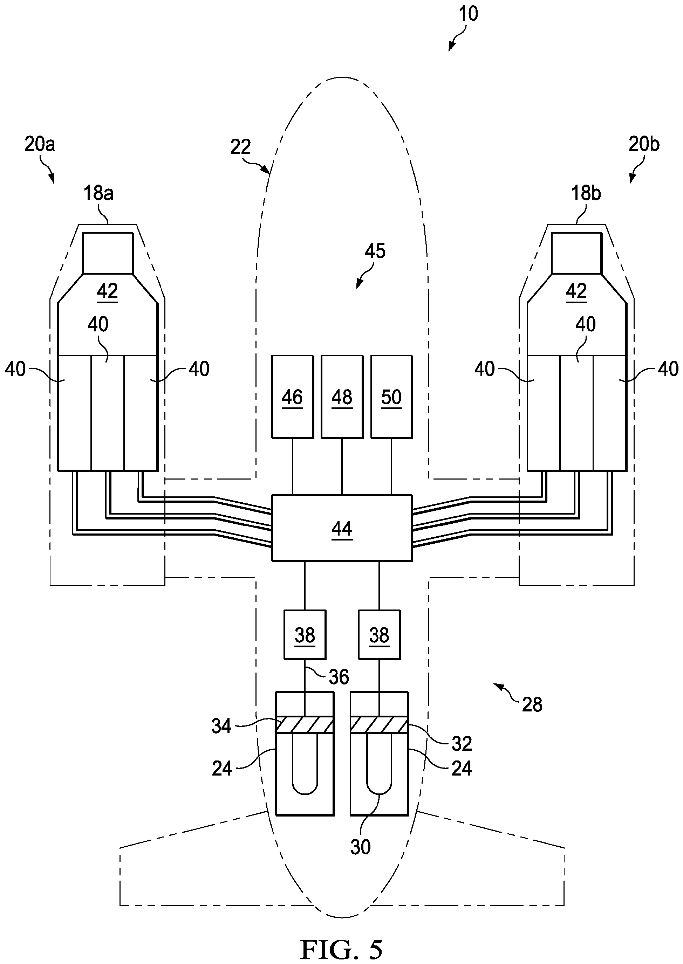

Referring to Figures 1-4, a tiltrotor aircraft is schematically illustrated and generally designated 10. With additional reference to Figure 5, aircraft 10 includes a fuselage 12, a wing 14 and a tail assembly 16 including control surfaces operable for horizontal and/or vertical stabilization during forward flight. Located proximate the outboard ends of wing 14 are nacelles 18a, 18b that are rotatable relative to wing 14 between a generally vertical orientation, as best seen in FIG. 1, and a generally horizontal orientation, as best seen in FIGS. 2-4. Nacelles 18a, 18b each house a portion of the drive system that rotates proprotor assemblies 20a, 20b, respectively. Each proprotor assembly 20a, 20b includes a plurality of proprotor blades 22 that are operable to rotate, as best seen in FIGS. 1-2. In some embodiments, proprotor blades 22 are operable to be feathered, as best seen in FIG. 3 and operable to be folded, as best seen in FIG. 4. Aircraft 10 includes one or more convertible engines 24 that can operate in turboshaft mode, turbofan mode, or a combination of turboshaft and turbofan mode.

FIG. 1 illustrates aircraft 10 in VTOL or helicopter flight mode, in which proprotor assemblies 20a, 20b are rotating in a substantially horizontal plane to provide a lifting thrust, such that aircraft 10 flies much like a conventional helicopter. In this configuration, engines 24 are operable in turboshaft mode wherein hot combustion gases in each engine 24 cause rotation of a power turbine 30 (FIG. 5) coupled to an output shaft 36 that is used to power the electric drive system 38, 40 connected to proprotor assemblies 20a, 20b. Thus, in this configuration, aircraft 10 is considered to be in a rotary flight mode.

FIG. 2 illustrates aircraft 10 in proprotor forward flight mode, in which proprotor assemblies 20a, 20b are rotating in a substantially vertical plane to provide a forward thrust enabling wing 14 to provide a lifting force responsive to forward airspeed, such that aircraft 10 flies much like a conventional propeller driven aircraft. In this configuration, engines 24 are operable in the turboshaft mode and aircraft 10 is considered to be in the rotary flight mode.

In the rotary flight mode of aircraft 10, proprotor assemblies 20a, 20b rotate in opposite directions to provide torque balancing to aircraft 10. For example, when viewed from the front of aircraft 10 in proprotor forward flight mode (FIG. 2) or from the top in helicopter mode (FIG. 1), proprotor assembly 20a rotates clockwise, as indicated by motion arrows 26a, and proprotor assembly 20b rotates counterclockwise, as indicated by motion arrows 26b. In the illustrated embodiment, proprotor assemblies 20a, 20b each includes three proprotor blades 22 that are equally spaced apart circumferentially at approximately 120-degree intervals. It should be understood by those having ordinary skill in the art, however, that the proprotor assemblies of the present disclosure could have proprotor blades with other designs and other configurations including proprotor assemblies having four, five or more proprotor blades. In addition, it should be appreciated that aircraft 10 can be operated such that proprotor assemblies 20a, 20b are selectively positioned between proprotor forward flight mode and helicopter mode, which can be referred to as a conversion flight mode.

FIG. 3 illustrates aircraft 10 in transition between proprotor forward flight mode and airplane forward flight mode, in which proprotor blades 22 of proprotor assemblies 20a, 20b have been feathered, or oriented to be streamlined in the direction of flight, such that proprotor blades 22 act as brakes to aerodynamically stop the rotation of proprotor assemblies 20a, 20b. In this configuration, engines 24 are operable in turbofan mode wherein hot combustion gases in each engine 24 cause rotation of a power turbine 30 mechanically coupled to a turbofan 32 that forces bypass air through a fan duct to create forward thrust enabling wing 14 to provide a lifting force responsive to forward airspeed, such that aircraft 10 flies much like a conventional jet aircraft. Thus, in this configuration, aircraft 10 is considered to be in a non-rotary flight mode. As further described below, convertible engine 24 can provide simultaneous power to create forward thrust and shaft power to produce electric power.

FIG. 4 illustrates aircraft 10 in airplane forward flight mode, in which proprotor blades 22 of proprotor assemblies 20a, 20b have been folded to be oriented substantially parallel to respective nacelles 18a, 18b to minimize the drag force generated by proprotor blades 22. In this configuration, engines 24 are operable in the turbofan mode and aircraft 10 is considered to be in the non-rotary flight mode. The forward cruising speed of aircraft 10 can be significantly higher in airplane forward flight mode versus proprotor forward flight mode as the forward airspeed induced proprotor aeroelastic instability is overcome. As further described below, convertible engine 24 can provide thrust and shaft power simultaneously, for example in forward flight excess power in engine 24 may be diverted to shaft power.

Even though aircraft 10 is illustrated as having two engines fixed to the fuselage, it should be understood by those having ordinary skill in the art that other engine arrangements are possible and are considered to be within the scope of the present disclosure. In addition, even though proprotor assemblies 20a, 20b are illustrated in the context of tiltrotor aircraft 10, it should be understood by those having ordinary skill in the art that the proprotor assemblies disclosed herein can be implemented on other tiltrotor aircraft including, for example, quad tiltrotor aircraft having an additional wing member aft of wing 14, unmanned tiltrotor aircraft or other tiltrotor aircraft configurations.

Figure 5 schematically illustrates an exemplary high-speed hybrid propulsion system 28 incorporated into a tiltrotor aircraft for high-speed forward flight. Aircraft 10 is depicted having a fuselage 12 and nacelles 18a, 18b. Fuselage 12 includes one or more convertible engines 24. Convertible engine 24 has a core 30 (e.g., compressor, burner, and turbine) mechanically coupled to a fan 32 that is positioned forward of core 30. Fan 32 has inlet guide vanes 34. Core 30 and fan 32 are located inside of a duct extending from a forward-facing fan inlet to an aft exhaust. Core 30 is also coupled to a drive shaft 36 that is coupled to an electrical generator 38. Inlet guide vanes 34 can be operated to control the amount of power that is directed to fan 32 to create forward thrust and the amount of power that is directed to shaft 36. Convertible engine 24 allows for shaft horsepower only, fan thrust only, and multi-mode simultaneous power sharing.

Each proprotor assembly 20a, 20b includes one or more electric motors 40 connected to a proprotor gearbox 42 and proprotors blades 22 (FIGS. 1-4). During rotary flight, convertible engine 24 produces shaft 36 horsepower that drives generator 38 to produce electric power that is distributed to electric motors 40 and rotate proprotor assemblies 20a, 20b.

Generators 38 convert shaft 36 horsepower to electrical power that is fed to electrical bus 44. Electrical bus 44 may include electronics necessary to condition power, switch between power outputs, dissipate power, and/or otherwise selectively direct electrical power to systems. Electrical power can be selectively distributed by electrical bus 44 to electric motors 40 and one or more of the aircraft systems generally designated 45. Aircraft systems 45 includes without limitation electrical storage device 46 (batteries, capacitor), aircraft accessories 48, and power intensive systems 50 such as directed energy weapons. Electrical storage 46 may comprise for example a zinc/air type battery, a solid-state type battery, and/or a lithium-ion type battery. Electrical storage 46 may include a capacitor or supercapacitor of a polyaniline/graphene construction or any other suitable material and construction. Accessories 48 include internal and external lighting, communications equipment, avionics systems, and/or any other device or system that can be electrically powered. Directed energy weapons 50 may include without limitation electronic attack weapons, lasers, high-power radar, microwave beams, and particle beams.

The convertible engine horsepower is sized to provide for vertical takeoff and landing (VTOL). Due to the VTOL power requirement being higher than the cruise power requirement, significant power is available to apply power to an alternate device during cruise mode. For example, during cruise flight, the excess power produced by convertible engine 24 can be directed to shaft 36 horsepower to drive generator(s) 38 and to power a power-intensive device such as a directed energy weapon 50, charge electrical storage 46, and/or power an accessory 48. Electrical storage 46 provides additional capability for increased power during VTOL or other rotary operations by supplying additional electric power for short durations.

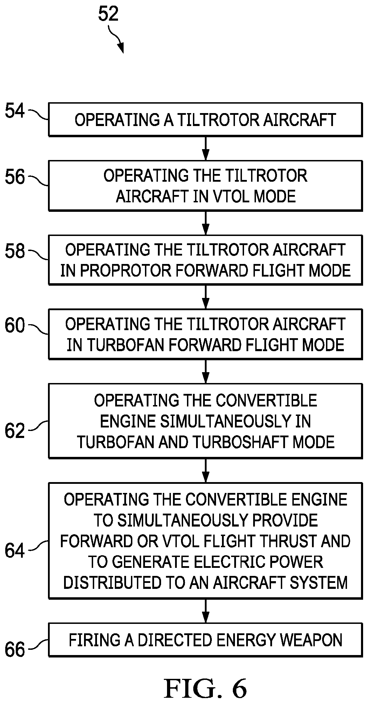

Figure 6 illustrates an exemplary method 52 of operating a tiltrotor aircraft, which is described with reference to Figures 1-5. At block 54, a tiltrotor aircraft 10 having hybrid propulsion system 28 is operated. Tiltrotor aircraft 10 includes a convertible engine 24 having a core 30 and a fan 32 with inlet guide vanes 34. Convertible engine 24 is coupled to a drive shaft 36, which is coupled to an electrical generator 38. Convertible engine 24 is operable to simultaneously produce shaft 36 horsepower and thrust via fan 32. Aircraft 10 includes proprotor assemblies 20a, 20b located respectively with pivotable nacelles 18a, 18b. Each proprotor assembly 20a, 20b includes an electric motor 40 coupled to proprotor blades 22. Generator 38 is electrically connected to an electrical bus 44 to distribute electric power to electric motors 40 and one or more aircraft systems 45.

At block 56, aircraft 10 is operated in a vertical takeoff and landing (VTOL) mode in which proprotor assemblies 20a, 20b are rotating in a substantially horizontal plane to provide a lifting thrust. Convertible engine 24 is operated in turboshaft mode providing shaft horsepower through driveshaft 36 to generator 38. In turboshaft mode, inlet guide vanes 34 may close fan 32 so that forward turbofan thrust is not created and power is directed to shaft 36 only or turbofan thrust is minimized and turboshaft power is increased. Generator 38 produces electricity to power electric motors 40 to rotate proprotor assemblies 20a, 20b. If electric power is produced in excess of the power necessary to drive electric motors 40 and proprotor assemblies 20a, 20b, the excess power can be directed to aircraft systems 45, in particular, electrical storage 46 and/or electric accessories 48. In VTOL flight, all or substantially all power can be directed to turboshaft mode for maximum vertical lift. In VTOL flight, the majority of power may be turboshaft power for vertical lift and some power directed to turbofan mode to generate forward thrust for a short takeoff capability, for example to achieve a heavy takeoff.

At block 58, aircraft 10 is operated in proprotor forward flight mode as illustrated for example in Figure 2. Convertible engine 24 is operating in turboshaft mode providing power to generator 38 via drive shaft 36. Generator 38 produces electric power that is distributed via bus 44 to electric motors 40 to drive proprotor assemblies 20a, 20b in proprotor forward flight mode. Forward flight requires less power than VTOL flight mode, and excess convertible engine 24 power can be used to generate electric power to distribute to one or more of aircraft systems 45.

At block 60, aircraft 10 is operated in turbofan forward flight mode as illustrated for example in FIG. 3 and/or FIG. 4. Convertible engine 34 is operated to create forward thrust via fan 32. At block 62, convertible engine 34 is operated to simultaneously provide forward thrust via fan 32 and to provide shaft horsepower to drive shaft 36 and generator 38 to produce electric power. Convertible engine 24 may be operated in turbofan only mode and electric power may be distributed from electric power storage 46 to electric accessories 48.

At block 64, convertible engine 24 simultaneously provides lifting thrust (VTOL mode) or forward flight thrust and shaft horsepower generating electric power distributed to one or more aircraft systems 45.

At block 66, a directed energy weapon 50 is fired. In an exemplary embodiment, directed energy weapon 50 is fired with aircraft 10 operating in proprotor forward flight mode using electrical power produced by generator 38 and convertible engine 24 in excess of the electrical power required to operate electric motors 40 and proprotor assemblies 20a, 20b. In an exemplary embodiment, directed energy weapon 50 is fired with aircraft 10 operating in turbofan forward flight mode using electrical power produced by generator 38 and convertible engine 24 in excess of power supplied to turbofan 32. In an embodiment, electric power from electrical storage 46 is distributed to directed energy weapon 50.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include such elements or features.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "inboard," "outboard, "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction. As used herein, the terms "connect," "connection," "connected," "in connection with," and "connecting" may be used to mean in direct connection with or in connection with via one or more elements. Similarly, the terms "couple," "coupling," and "coupled" may be used to mean directly coupled or coupled via one or more elements.

The term "substantially," "approximately," and "about" is defined as largely but not necessarily wholly what is specified (and includes what is specified; e.g., substantially 90 degrees includes 90 degrees and substantially parallel includes parallel), as understood by a person of ordinary skill in the art. The extent to which the description may vary will depend on how great a change can be instituted and still have a person of ordinary skill in the art recognized the modified feature as still having the required characteristics and capabilities of the unmodified feature. In general, but subject to the preceding, a numerical value herein that is modified by a word of approximation such as "substantially," "approximately," and "about" may vary from the stated value, for example, by 0.1, 0.5, 1, 2, 3, 4, 5, 10, or 15 percent.

The foregoing outlines features of several embodiments so that those skilled in the art may better understand the aspects of the disclosure. Those skilled in the art should appreciate that they may readily use the disclosure as a basis for designing or modifying other processes and structures for carrying out the same purposes and/or achieving the same advantages of the embodiments introduced herein. The term "comprising" within the claims is intended to mean "including at least" such that the recited listing of elements in a claim are an open group. The terms "a," "an" and other singular terms are intended to include the plural forms thereof unless specifically excluded.

## Claims

1. A tiltrotor aircraft (10), comprising:
electric motors (40);
two proprotors (20a, 20b) pivotable between a vertical takeoff and landing (VTOL) position and a forward flight position, each of the proprotors (20a, 20b) coupled to one or more of the electric motors (40);
an electric generator (38) electrically connected to the electric motors (40); and
a convertible turbofan engine (24) coupled to the electric generator (38) through a drive shaft (36), wherein the convertible turbofan engine (24) is configured to operate as a turbofan engine or a turboshaft engine and to simultaneously operate in turbofan mode to create forward thrust and in turboshaft mode to power the drive shaft (36), and wherein the convertible turbofan engine (24) comprises a core (30), and a fan (32) **characterized in that** the convertible turbofan engine further comprises inlet guide vanes (34) operable to control the amount of power directed to the fan (32) to create forward thrust and the amount of power directed to the drive shaft (36).

2. The tiltrotor aircraft (10) of claim 1, further comprising an electric aircraft system (45) electrically connected to the electric generator (38).

3. The tiltrotor aircraft (10) of claim 1 or claim 2, further comprising a directed energy weapon (50) electrically connected to the electric generator (38) and/or an electrical storage device (46) electrically connected to the electric generator (38) and the electric motors (40).

4. The tiltrotor aircraft of any preceding claim, further comprising pivotal nacelles (18a, 18b) housing the electric motors (40).

5. The tiltrotor aircraft (10) of any preceding claim, wherein the convertible turbofan engine (24) is configured, when the proprotors (20a, 20b) are in the VTOL position, to provide shaft horsepower to the drive shaft (36); and
the convertible turbofan engine (24) is configured, when the proprotors (20a, 20b) are in the forward flight position, to simultaneously provide shaft horsepower to the drive shaft (36) and the electric generator (38) and to create forward turbofan thrust.

6. The tiltrotor aircraft (10) of claim 2 , further comprising an electrical bus (44) electrically connected to the electric generator (38), the electric motors (40), and the electric aircraft system (45).

7. A method, comprising:
operating a tiltrotor aircraft (10) having a hybrid propulsion system (28) comprising a convertible turbofan engine (24) having a core (30) and a fan (32) with inlet guide vanes (34), an electric generator (38) coupled to the core (30) by a drive shaft (36), proprotors (20a, 20b) located respectively with pivotable nacelles (18a, 18b), electric motors (40), each of the proprotors (20a, 20b) coupled to at least one of the electric motors (40), an electric aircraft system (45), and an electrical bus (44) electrically connected to the electric generator (38), the electric motors (40), and the electric aircraft system (45), the convertible turbofan engine (24) being configured to operate as a turbofan engine or a turboshaft engine and to simultaneously operate in turbofan mode to create forward thrust and turboshaft mode to power the drive shaft (36), the convertible turbofan engine (24) comprising a core (30), a fan (32) and inlet guide vanes (34) operable to control the amount of power directed to the fan (32) to create forward thrust and the amount of power directed to the drive shaft (36);
powering the proprotors (20a, 20b) in vertical takeoff and landing, VTOL, flight comprising directing electric power from the electric generators (38) to the electric motors (40) by operating the convertible turbofan engine (24) in turboshaft mode and powering the drive shaft (36) and electric generator (38);
operating the tiltrotor aircraft (10) in turbofan forward flight in response to operating the convertible turbofan engine (24) in turbofan mode to produce forward thrust;
producing excess electric power during the turbofan forward flight in response to directing power from the convertible turbofan engine (24) to the drive shaft (36) and the electric generator (38); and
distributing the excess electric power to the electric aircraft system (45).

8. The method of claim 7, wherein the electric aircraft system (45) comprises an electric power storage device (46) and/or a directed energy weapon (50).

9. The method of claim 8, further comprising firing the directed energy weapon (50).

## Patentansprüche

1. Kipprotor-Luftfahrzeug (10), umfassend:
Elektromotoren (40);
zwei Proprotoren (20a, 20b), die zwischen einer vertikalen Start- und Landungsposition (VTOL) und einer Vorwärts-Flugposition gedreht werden können, wobei jeder der Proprotoren (20a, 20b) an einen oder mehreren der Elektromotoren (40) gekoppelt sind;
einen Elektrogenerator (38), der elektrisch mit den Elektromotoren (40) verbunden ist, und
ein konvertierbares Mantelstrom-Triebwerk (24), das mittels einer Antriebswelle (36) an den Elektrogenerator (38) gekoppelt ist, wobei das konvertierbare Mantelstrom-Triebwerk (24) konfiguriert ist, um als ein Mantelstrom-Triebwerk oder ein Turbomotor betrieben zu werden und gleichzeitig in einem Mantelstrom-Triebwerkmodus, um einen Vorwärtsschub zu erzeugen und in einem Turbomodus, um die Antriebswelle (36) anzutreiben, betrieben zu werden, und
wobei das konvertierbare Mantelstrom-Triebwert (24) einen Kern (30) und ein Gebläse (32) umfasst, **dadurch gekennzeichnet, dass** das konvertierbare Mantelstrom-Triebwerk weiter Eintrittsleitschaufeln (34) umfasst, die betrieben werden, um die Strommenge, die an das Gebläse (32) zum Erzeugen eines Vorwärtsschubs geleitet wird, und die Strommenge, die an die Antriebswelle (36) geleitet wird, zu steuern.

2. Kipprotor-Luftfahrzeug (10) nach Anspruch 1, weiter umfassend ein elektrisches Luftfahrzeugsystem (45), das elektrisch mit dem Elektrogenerator (38) verbunden ist.

3. Kipprotor-Luftfahrzeug (10) nach Anspruch 1 oder Anspruch 2, weiter umfassend eine gerichtete Energiewaffe (50), die elektrisch mit dem Elektrogenerator (38) verbunden ist und/oder eine elektrische Speichereinrichtung (46), die elektrisch mit dem Elektrogenerator (38) und den Elektromotoren (40) verbunden ist.

4. Kipprotor-Luftfahrzeug nach einem der vorstehenden Ansprüche, weiter umfassend drehbare Gondeln (18a, 18b), in denen die Elektromotoren (40) untergebracht sind.

5. Kipprotor-Luftfahrzeug (10) nach einem der vorstehenden Ansprüche, wobei das konvertierbare Mantelstrom-Triebwerk (24) konfiguriert ist, eine Antriebswellenleistung an die Antriebswelle (36) bereitzustellen, wenn sich die Proprotoren (20a, 20b) in der VTOL-Position befinden; und
das konvertierbare Mantelstrom-Triebwerk (24) konfiguriert ist, Antriebswellenleistung gleichzeitig an die Antriebswelle (36) und den Elektrogenerator (38) bereitzustellen und einen Mantelstrom-Triebwerk-Vorwärtsschub zu erzeugen, wenn sich die Proprotoren (20a, 20b) in der Vorwärtsflugposition befinden.

6. Kipprotor-Luftfahrzeug (10) nach Anspruch 2, weiter umfassend eine elektrische Sammelleitung (44), die elektrisch mit dem Elektrogenerator (38), den Elektromotoren (40) und dem elektrischen Luftfahrzeugsystem (45) verbunden ist.

7. Verfahren, umfassend:
Betreiben eines Kipprotor-Luftfahrzeugs (10), das ein Hybridantriebssystem (28) aufweist, umfassend ein konvertierbares Mantelstrom-Triebwerk (24), das einen Kern (30) und ein Gebläse (32) mit Eintrittsleitschaufeln (34), einen Elektrogenerator (38), der mittels einer Antriebswelle (36) an den Kern (30) gekoppelt ist, Proprotoren (20a, 20b), die jeweils mit drehbaren Gondeln (18a, 18b) angeordnet sind, Elektromotoren (40), wobei jeder der Proprotoren (20a, 20b) an mindestens einen der Elektromotoren (40) gekoppelt ist, ein elektrisches Luftfahrzeugsystem (45) und eine elektrische Sammelleitung (44), die elektrisch mit dem Elektrogenerator (38) verbunden ist, aufweist, wobei die Elektromotoren (40) und das elektrische Luftfahrzeugsystem (45), das konvertierbare Mantelstrom-Triebwerk (24) konfiguriert sind, um als ein Mantelstrom-Triebwerk oder ein Turbomotor betrieben zu werden und gleichzeitig in dem Mantelstrom-Triebwerkmodus, um einen Vorwärtsschub zu erzeugen, und im Turbomodus, um die Antriebswelle (36) anzutreiben, betrieben zu werden, wobei das konvertierbare Mantelstrom-Triebwerk (24) einen Kern (30), ein Gebläse (32) und Eintrittsleitschaufeln (34) umfasst, die betrieben werden können, um die Strommenge, die an das Gebläse (32) zum Erzeugen eines Vorwärtsschubs geleitet wird und die Strommenge, die an die Antriebswelle (36) geleitet wird, zu steuern;
Antreiben der Proprotoren (20a, 20b) in einem vertikalen Start- und Landungsflug, VTOL, umfassend das Leiten von elektrischem Strom von den Elektrogeneratoren (38) an die Elektromotoren (40) durch Betreiben des konvertierbaren Mantelstrom-Triebwerks (24) im Turbomodus und Antreiben der Antriebswelle (36) und des Elektrogenerators (38);
Betreiben des Kipprotor-Luftfahrzeugs (10) in einem Mantelstrom-Triebwerk-Vorwärtsflug als Reaktion auf das Betreiben des konvertierbaren Mantelstrom-Triebwerks (24) im Mantelstrom-Triebwerkmodus, um einen Vorwärtsschub zu produzieren;
Produzieren von überschüssigem elektrischen Strom während dem Mantelstrom-Triebwerk-Vorwärtsflug als Reaktion auf das Leiten von Strom von dem konvertierbaren Mantelstrom-Triebwerk (24) an die Antriebswelle (36) und den Elektrogenerator (38); und
Verteilen des überschüssigen elektrischen Stroms an das elektrische Luftfahrzeugsystem (45).

8. Verfahren nach Anspruch 7, wobei das elektrische Luftfahrzeugsystem (45) eine elektrische Stromspeichereinrichtung (46) und/oder eine gerichtete Energiewaffe (50) umfasst.

9. Verfahren nach Anspruch 8, weiter umfassend das Schießen der gerichteten Energiewaffe (50).

## Revendications

1. Aéronef à rotors basculants (10), comprenant :
des moteurs électriques (40) ;
deux rotors orientables (20a, 20b) pouvant pivoter entre une position de décollage et atterrissage verticaux (VTOL) et une position de vol horizontal, chacun des rotors orientables (20a, 20b) étant couplé à un ou plusieurs des moteurs électriques (40) ;
un générateur électrique (38) relié électriquement aux moteurs électriques (40) ; et
un turboréacteur à double flux convertible (24) couplé au générateur électrique (38) à travers un arbre d'entraînement (36), dans lequel le turboréacteur à double flux convertible (24) est configuré pour fonctionner en tant qu'un turboréacteur à double flux ou un turbomoteur et pour fonctionner simultanément en mode turboréacteur à double flux pour créer une poussée vers l'avant et en mode turbomoteur pour alimenter l'arbre d'entraînement (36), et
dans lequel le turboréacteur à double flux convertible (24) comprend un cœur (30) et une soufflante (32),
**caractérisé en ce que** le turboréacteur à double flux convertible comprend en outre des aubes directrices d'entrée (34) utilisables pour commander la quantité d'énergie délivrée à la soufflante (32) pour créer une poussée vers l'avant et la quantité d'énergie délivrée à l'arbre d'entraînement (36).

2. Aéronef à rotors basculants (10) selon la revendication 1, comprenant en outre un système électrique d'aéronef (45) relié électriquement au générateur électrique (38).

3. Aéronef à rotors basculants (10) selon la revendication 1 ou 2, comprenant en outre une arme à énergie dirigée (50) reliée électriquement au générateur électrique (38) et/ou un dispositif de stockage électrique (46) relié électriquement au générateur électrique (38) et aux moteurs électriques (40).

4. Aéronef à rotors basculants selon l'une quelconque des revendications précédentes, comprenant en outre des nacelles pivotantes (18a, 18b) logeant les moteurs électriques (40).

5. Aéronef à rotors basculants (10) selon l'une quelconque des revendications précédentes, dans lequel le turboréacteur à double flux convertible (24) est configuré, lorsque les rotors orientables (20a, 20b) sont à la position VTOL, pour fournir une puissance d'arbre à l'arbre d'entraînement (36) ; et
le turboréacteur à double flux convertible (24) est configuré, lorsque les rotors orientables (20a, 20b) sont à la position de vol horizontal, pour simultanément fournir une puissance d'arbre à l'arbre d'entraînement (36) et au générateur électrique (38) et créer une poussée de turboréacteur à double flux vers l'avant.

6. Aéronef à rotors basculants (10) selon la revendication 2, comprenant en outre un bus électrique (44) relié électriquement au générateur électrique (38), aux moteurs électriques (40), et au système électrique d'aéronef (45).

7. Procédé comprenant :
le fonctionnement d'un aéronef à rotors basculants (10) ayant un système de propulsion hybride (28) comprenant un turboréacteur à double flux convertible (24) ayant un cœur (30) et une soufflante (32) avec des aubes directrices d'entrée (34), un générateur électrique (38) couplé au cœur (30) par un arbre d'entraînement (36), des rotors orientables (20a, 20b) situés respectivement avec des nacelles pivotantes (18a, 18b), des moteurs électriques (40), chacun des rotors orientables (20a, 20b) étant couplé à au moins l'un des moteurs électriques (40), un système électrique d'aéronef (45), et un bus électrique (44) relié électriquement au générateur électrique (38), aux moteurs électriques (40) et au système électrique d'aéronef (45), le turboréacteur à double flux convertible (24) étant configuré pour fonctionner en tant qu'un turboréacteur ou un turbomoteur et pour fonctionner simultanément en mode turboréacteur pour créer une poussée vers l'avant et en mode turbomoteur pour alimenter l'arbre d'entraînement (36), le turboréacteur à double flux convertible (24) comprenant un cœur (30), une soufflante (32) et des aubes directrices d'entrée (34) utilisables pour commander la quantité d'énergie délivrée à la soufflante (32) pour créer une poussée vers l'avant et la quantité d'énergie délivrée à l'arbre d'entrainement (36) ;
l'alimentation des rotors orientables (20a, 20b) en vol à décollage et atterrissage verticaux, VTOL, comprenant la délivrance d'énergie électrique des générateurs électriques (38) aux moteurs électriques (40) par le fonctionnement du turboréacteur à double flux convertible (24) en mode turboréacteur et l'alimentation de l'arbre d'entraînement (36) et du générateur électrique (38) ;
le fonctionnement de l'aéronef à rotors basculants (10) en vol vers l'avant à turboréacteur à double flux en réponse au fonctionnement du turboréacteur à double flux convertible (24) en mode turboréacteur pour produire une poussée vers l'avant ;
la production d'une énergie électrique excédentaire au cours du vol vers l'avant à turboréacteur à double flux en réponse à la délivrance d'énergie du turboréacteur à double flux convertible (24) à l'arbre d'entraînement (36) et au générateur électrique (38) ; et
la distribution de l'énergie électrique excédentaire au système électrique d'aéronef (45).

8. Procédé selon la revendication 7, dans lequel le système électrique d'aéronef (45) comprend un dispositif de stockage d'énergie électrique (46) et/ou une arme à énergie dirigée (50).

9. Procédé selon la revendication 8, comprenant en outre le tir de l'arme à énergie dirigée (50).
